# EUROPEAN PATENT SPECIFICATION

(11) **EP 0 638 615 B1**
(45) Date of publication and mention of the grant of the patent: **19.07.2000**
(21) Application number: 94305922.0
(22) Date of filing: 10.08.1994
(51) Int. Cl.: C09B 67/04, C09B 67/22, C09D 11/02, C09D 7/12

(54) **Process for the production of copper phthalocyanine pigment and its use**
Verfahren zur Herstellung eines Kupferphtalocyaninpigments und seine Verwendung
Procédé de fabrication d'un pigment de phtalocyanine de cuivre et son utilisation

(30) Priority: 10.08.1993 JP 19845393
(43) Date of publication of application: 15.02.1995
(73) Proprietor: TOYO INK MANUFACTURING CO., LTD., Tokyo (JP)
(72) Inventor: Maki, Hitoshi, c/o Toyo Ink Manufact.Co.Ltd., Tokyo (JP); Sawamura, Katsuhiko, c/o Toyo Ink Manuf. Co. Ltd., Tokyo (JP); Kato, Shigeki, c/o Toyo Ink Manufact.Co.Ltd., Tokyo (JP); Ikegaya, Toshimitsu, c/o Toyo Ink Manuf. Co. Ltd., Tokyo (JP)
(74) Representative: Woods, Geoffrey Corlett

(56) References cited:
- FR-A- 2 128 493
- FR-A- 2 384 000
- US-A- 4 236 933
- DATABASE WPI Section Ch, Week 8534 Derwent Publications Ltd., London, GB; Class A25, AN 85-207835 & JP-A-60 133 065 ( DAINIPPON INK CHEM KK) , 16 July 1985
- DATABASE WPI Section Ch, Week 8209 Derwent Publications Ltd., London, GB; Class A60, AN 82-16611E & JP-A-57 012 067 ( TOYO INK MFG KK) , 21 January 1982
- DATABASE WPI Section Ch, Week 8545 Derwent Publications Ltd., London, GB; Class E23, AN 85-279284 & JP-A-60 188 470 ( SUMITOMO CHEM IND KK) , 25 September 1985

## Description

The present invention relates to a process for the production of a copper phthalocyanine pigment. More specifically, it relates to a process for the production of a copper phthalocyanine pigment, which comprises wet-milling crude copper phthalocyanine in the co-presence of a phthalocyanine derivative, an inorganic salt and an organic liquid. Further, the present invention relates to a printing ink (gravure ink or offset ink) or a coating composition, which has excellent fluidity and excellent gloss and which comprises a copper phthalocyanine pigment obtained by the above process and a vehicle for a printing ink or a vehicle for a coating composition.

Finely milled copper phthalocyanine pigments are widely used in large amounts in the industrial field of coloring materials owing to their fine color tones, high tinting strength and excellent properties in weatherability and heat resistance.

Generally, crude copper phthalocyanine is produced by reacting phthalic anhydride or its derivative, urea and a copper source, or reacting phthalodinitrile or its derivative and a copper source, in the presence or absence of a catalyst such as ammonium molybdate or titanium tetrachloride in an organic solvent such as alkylbenzene, trichlorobenzene or nitrobenzene under atmospheric pressure or elevated pressure. During the synthesis of crude copper phthalocyanine, however, synthesized phthalocyanine molecules undergo crystal growth one after another in a synthesis solvent, and it is obtained only in the form of coarse needle-like particles having a major diameter of about 10 to 200 µm. As a consequence, the so-synthesized crude copper phthalocyanine has little or no value as a pigment for coloring an ink, a coating composition and plastics.

Therefore, the above crude copper phthalocyanine is required to be finely milled so that it is converted to particles having high coloring usefulness, i.e., having a particle diameter of approximately 0.01 to 0.5 µm.

For industrially finely milling crude copper phthalocyanine, JP-A-51-28119 typically discloses a so-called solvent-salt milling method in which crude copper phthalocyanine is charged into a double-armed dispersing mixer together with a water-soluble inorganic salt as a milling aid such as sodium chloride and an organic liquid such as an alcohol, a polyol or an amine, and wet-milled. The copper phthalocyanine pigment obtained by the above method has fine particles, and mostly exhibits a high viscosity when dispersed in a vehicle for a gravure ink or a coating composition. It is therefore difficult to take the product out of a dispersing apparatus and transport it. In a worse case, the product sometimes undergoes gelation while it is stored, and can be no longer used. Further, when a different pigment is mixed with the above product, the phenomenons of separation and precipitation induced by aggregation may occur so that nonuniformity in color and a decrease in tinting strength occur in a printed product. Further, a printed or coated surface on the printed product may show a decrease in gloss and defective leveling.

There is another phenomenon involving a change in a crystal state. That is, in a nonaqueous vehicle of an offset ink, a gravure ink or a coating composition, the crystal particles of the pigment, which are unstable with regard to energy, shift to a stable state while altering in size and form. As a result, coarse particles may occur in the vehicle, the hue for a printed product may greatly change, or the tinting strength may decrease. The commercial value of the pigment as a product may therefore be impaired.

For overcoming the above defects, Japanese Patent Publication No. 39-28884, JP-A-52-33922 and JP-A-57-12067 disclose a method in which copper phthalocyanine is mixed with a powder of copper phthalocyaninesulfonic acid organic amine salt having the effect of preventing the crystal growth and aggregation of primary particles. However, a powder of the copper phthalocyaninesulfonic acid organic amine salt itself has high dry-aggregation properties and low dispersibility. For obtaining a sufficient effect by merely mixing copper phthalocyanine with a powder of the above salt, it is required to use a large amount of a powder of the salt.

JP-A-60-133065 discloses a method in which a copper phthalocyaninesulfonic acid amine salt of which the amine salt has 2 to 16 carbon atoms and which has 1 to 2 substituents is added while a crude copper phthalocyanine is wet-milled. However, the above amine salt has a structure of a diamine type, and a copper phthalocyaninesulfonic acid amine salt of this type is ineffective for improving the dispersibility and obtaining a copper phthalocyanine pigment having high tinting strength and a clear hue. That is, a pigment obtained by the above method has problems in practical use, such as a decrease in gloss and color separation induced by aggregation. Further, industrially disadvantageously, the copper phthalocyaninesulfonic acid amine salt of a diamine type requires a very difficult step for its synthesis.

Further, JP-A-60-188470 discloses a method of adding a copper phthalocyanine derivative of which the amine salt has 2 to 8 carbon atoms and which contains a binding group of an alkyl, sulfone or methylcarbonyl group with a copper phthalocyanine, a copper phthalocyanine derivative into which a halogen atom, a nitro group, an amino group, a sulfonic acid group or an alkyl group is directly introduced, or a phthalocyanine of which the central metal is other than copper. However, this method is still not yet effective for obtaining a copper phthalocyanine pigment having high tinting strength and a clear hue, and a copper phthalocyanine pigment obtained by the above method sometimes has problems in practical use, such as a decrease in gloss and colour separation induced by aggregation.

FR-A-2384000 discloses that sulphonated phthalocyanine amine derivatives can be used as a substitute for inorganic salts to overcome the problem of 'caking' during the milling of a copper phthalocyanine pigment.

It is an object of the present invention to provide a copper phthalocyanine pigment which gives, when dispersed in a vehicle for a printing ink or a coating composition, printing inks such as a gravure ink and an offset ink and a coating composition all of which have excellent gloss and excellent fluidity.

It is another object of the present invention to provide a printing ink composition comprising a copper phthalocyanine pigment obtained by the above process and a vehicle, and having excellent dispersability and excellent gloss.

It is further another object of the present invention to provide a coating composition comprising a copper phthalocyanine pigment obtained by the above process and a vehicle, and having excellent dispersability and excellent gloss.

It is still further another object of the present invention to provide a process for the production of a copper phthalocyanine pigment which exhibits excellent dispersability and has excellent tinting strength when used for colouring plastics.

According to the present invention, there is provided a process for the production of a copper phthalocyanine pigment, which comprises wet-milling at least one crude copper phthalocyanine selected from halogen-free copper phthalocyanine, monohalogenated copper phthalocyanine and semi-halogenated copper phthalocyanine in the presence of an inorganic salt as a milling aid and an organic liquid selected from an alcohol and a polyol, and then removing the inorganic salt and the organic liquid,
wherein 0.1 to 20% by weight based on the crude copper phthalocyanine, of a compound of the following formula (1) is added before or during the wet-milling,

MePc- (SO₃ ⁻⁺ NR₁R₂R₃R₄)ₙ (1)

wherein Me represents two hydrogen atoms or at least one metal selected from A1, Fe, Co, Ni, Cu and Zn, Pc is a phthalocyanine residue, each of R₁, R₂, R₃ and R₄ is independently a hydrogen atom, an alkyl group having 1 to 30 carbon atoms which is optionally substituted with at least one of phenyl, halogen, carbonyl, carboxyl, ether, ester and acyl, or a polyoxy lower alkylene group and n is an integer of 1 to 8, provided that at least one of R₁, R₂, R₃ and R₄ is an alkyl group having at least 10 carbon atoms or a polyoxy lower alkylene group.

Further, there is provided the use of a compound of formula (1) as an agent for preventing crystal growth and re-aggregation in the wet milling of a crude copper phthalocyanine pigment.

For overcoming the above-described problems, the present inventors have made diligent studies and found the following. When a crude copper phthalocyanine is wet milled, a phthalocyanine derivative having a different structure from any conventional one is added as an agent for preventing crystal growth and re-aggregation during the wet milling, whereby the resultant copper phthalocyanine pigment shows excellent fluidity when dispersed in a vehicle for a printing ink or a coating composition and has an excellent clear hue and high tinting strength. On the basis of this finding, the present invention has been completed.

The crude copper phthalocyanine used in the present invention refers to copper phthalocyanines produced by known methods, and is not specially limited. Generally, the crude copper phthalocyanine is produced by reacting phthalic anhydride or its halide, urea and a copper sources, or reacting phthalodinitrile or its halide and a copper source, in the presence or absence of a catalyst such as ammonium molybdate or titanium tetrachloride in a solvent such as alkylbenzene, trichlorobenzene or nitrobenzene at a temperature between 120°C and 250°C, preferably between 170°C and 230°C under atmospheric pressure or elevated pressure for 2 to 15 hours, preferably 3 to 7 hours. This crude copper phthalocyanine includes a halogen-free copper phthalocyanine, a monohalogenated copper phthalocyanine containing 1 halogen atom and a semi-halogenated copper phthalocyanine containing 2 to 4 halogen atoms.

In the present invention, a compound of the following formula (1), as defined above is added as an agent for preventing crystal growth and aggregation.

The method for the production of the above compound of the formula (1) is not specially limited. Typically, the compound of formula (1) is obtained by sulfonating a phthalocyanine and reacting the sulfonated phthalocyanine with an amine in the presence or absence of a solvent such as water or an organic solvent. Typically the amine is at least one selected from primary, secondary and tertiary amines and quaternary amonium.

Specific examples of the above amine include primary amines such as octylamine, nonylamine, decylamine, undecylamine, dodecylamine, tridecylamine, tetradecylamine, pentadecylamine, hexadecylamine, heptadecylamine, octadecylamine, nonadecylamine, eicosylamine, phenylamine and unsaturated amines corresponding to numbers of carbon atoms of these amines (these primary amines may have side chains); and secondary and tertiary amines and quaternary ammonium salts (composed of a combination of an alkyl group forming any one the above primary amines or an aryl group and methyl, ethyl, propyl, butyl or pentyl group) such as dioleylamine, distearylamine, dimethyloctylamine, dimethyldecylamine, dimethyllaurylamine, dimethylstearylamine, dilaurylmonomethylamine, trioctylamine, dimethyldioctylammonium chloride, dimethyldidecylammonium chloride, dimethyldidodecylammonium chloride, dimethyldioleylammonium chloride, trimethylstearylammonium chloride, dimethyldistearylammonium chloride, trimethyldodecylammonium chloride, trimethylhexadecylammonium chloride, trimethyloctadecylammonium chloride, dimethyldodecyltetradecylammonium chloride, and dimethylhexadecyloctadecylammonium chloride.

With an increase in the number of carbon atoms of the alkyl group of the amine component and the number of substituents on the alkyl group, the phthalocyanine derivative shows higher dispersibility. Therefore, the phthalocyanine derivative from such an amine component is effective for obtaining a copper phthalocyanine pigment having high fluidity in a vehicle and gloss.

In the formula (1), any one of R₁, R₂, R₃ and R₄ may be an alkyl group having a substituent. This substituent includes phenyl, halogen, hydroxyl carbonyl, carboxyl, ether, ester and acyl.

The polyoxy lower alkylene group, in the formula (1) includes polyoxyethylene and polyoxypropylene. The polyoxy lower alkylene group typically has a polymerization degree of 2 to 30, preferably 5 to 30.

The amount of the compound of the formula (1) based on the crude copper phthalocyanine is 0.1 to 20 % by weight. When this amount is less than 0.1 % by weight, no effects are obtained. When it exceeds 20 % by weight, uneconomically, no further effect is obtained. The compound of the formula (1) may be added before or during the wet-milling of the crude copper phthalocyanine.

In the present invention, the crude copper phthalocyanine is wet-milled in the presence of a milling aid selected from inorganic salts and an organic liquid selected from an alcohol and a polyol. The above milling aid is typically a water-soluble inorganic salt such as sodium chloride, sodium sulfate and calcium chloride. Further, the milling aid is preferably finely milled before use. The amount (weight) of the milling aid is typically 2 to 10 times, preferably 3 to 8 times, as large as that of the crude copper phthalocyanine.

The organic liquid is preferably one which has solubility in water at least to some extent. It is selected from alcohols and polyols. Examples of the alcohols include as n-propyl alcohol, n-butyl alcohol, isopropyl alcohol and isobutyl alcohol. Examples of the polyols include polyols, ethers of polyols, esters of polyols and chlorinated derivatives of these such as ethylene glycol, diethylene glycol, triethylene glycol, tetraethylene glycol, propylene glycol, dipropylene glycol, tripropylene glycol and tetrapropylene glycol. The above organic liquids may be used alone or in combination. The amount (weight) of the organic liquid is typically 0.1 to 2.0, preferably 0.3 to 1.5, times as large as that of the crude copper phthalocyanine.

The wet-milling apparatus can be selected from various kneaders and mixers used for conventional wet-milling methods.

Although differing depending upon the wet-milling apparatus and the amounts of the milling aid and the organic liquid, the time required for the wet-milling is typically 1 to 15 hours, preferably 2 to 10 hours. The wet-milling may be carried out longer than 15 hours, while there is no further improvement in the pigment quality, and undesirably, the energy efficiency is deteriorated.

Although differing depending upon the wet-milling apparatus, the amounts of the milling aid and the organic liquid and the milling time, the temperature for the wet-milling is typically between 20°C and 150°C, preferably between 80°C and 130°C. When the wet-milling temperature is higher than 150°C, the crystal growth occurs sharply, and it is hence required to decrease the wet-milling time. In this case, the time for dressing grains (forming uniform particles) is too short, which is undesirable in view of a product quality. After the wet-milling is initiated, the temperature gradually increases and arrives at an equilibrium at 90 to 120°C, and cooling or heating is effected as required.

The wet-milled copper phthalocyanine pigment is treated by a conventional method. That is, the wet-milled mixture is treated with water or a diluted acid, filtered and washed with water to remove the milling aid and the organic liquid, and the pigment is isolated. The pigment may be used directly in a wet state, or may be used in a powder state after it is dried.

A resin, a surfactant and other additive may be added to the pigment as required.

When a coating composition or a printing ink (gravure ink or offset ink) is produced from the copper phthalocyanine pigment obtained by the process of the present invention, the vehicle therefor is not specially limited. The vehicle may contain an auxiliary and an extender pigment.

The vehicle for the coating composition includes an acrylic resin, an alkyd resin, an epoxy resin, a chlorinated rubber, vinyl chloride, a synthetic resin emulsion, a silicone resin, a polyurethane resin, a polyester resin, a melamine resin, a urea resin, a mixture of at least two of these, and a mixture of a water-soluble resin or an emulsion resin prepared by solubilizing any one of the above resins in water with a solvent such as a hydrocarbon, an alcohol, a ketone, an ether alcohol, an ether, an ester or water.

The vehicle for the gravure ink includes gum rosin, wood rosin, tall oil rosin, lime rosin, rosin ester, a maleic acid resin, a polyamide resin, a vinyl resin, nitrocellulose, cellulose acetate, ethyl cellulose, chlorinated rubber, cyclized rubber, an ethylene-vinyl acetate copolymer resin, a urethane resin, a polyester resin, an alkyd resin, an acrylic resin, gilsonite, dammar, shellac, a mixture of at least two of the above resins, and a mixture of a water-soluble resin or an emulsion resin prepared by solubilizing any one of the above resins in water with a solvent such as a hydrocarbon, an alcohol, a ketone, an ether alcohol, an ether, an ester or water.

The vehicle for the offset ink includes a rosin-modified phenolic resin, a petroleum resin, an alkyd resin, and a mixture of a resin prepared by modifying any one of these resins with a drying oil, a plant oil such as linseed oil, tung oil or soybean oil and a solvent such as n-paraffin, isoparaffin, aromatic, naphthene, α-olefin or water.

The printing ink composition of the present invention and the coating composition of the present invention can be produced by dispersing the above copper phthalocyanine pigment or a mixture of the above copper phthalocyanine pigment with the above phthalocyanine derivative (compound of the formula (1)) in the corresponding vehicle with a dispersing apparatus.

Accordingly, the present invention provides a process for preparing a printing ink composition which process comprises preparing a copper phthalocyanine pigment by a process according to the invention and dispersing the thus obtained pigment with a vehicle. Also provided is a process for preparing a coating composition which process comprises preparing a copper phthalocyanine pigment by a process according to the invention and dispersing the thus obtained pigment with a vehicle.

The dispersing apparatus is typically selected from a dissolver, a high speed mixer, a homomixer, a kneader, a flusher, a roll mill, a sand mill and an atriter.

### Examples

The present invention will be detailed hereinafter with reference to Examples, in which "part" stands for "part by weight" and "%" stands for "% by weight".

Table 1 shows specific compounds of the formula (1), and Examples refer to numbers of the compounds listed in Table 1.

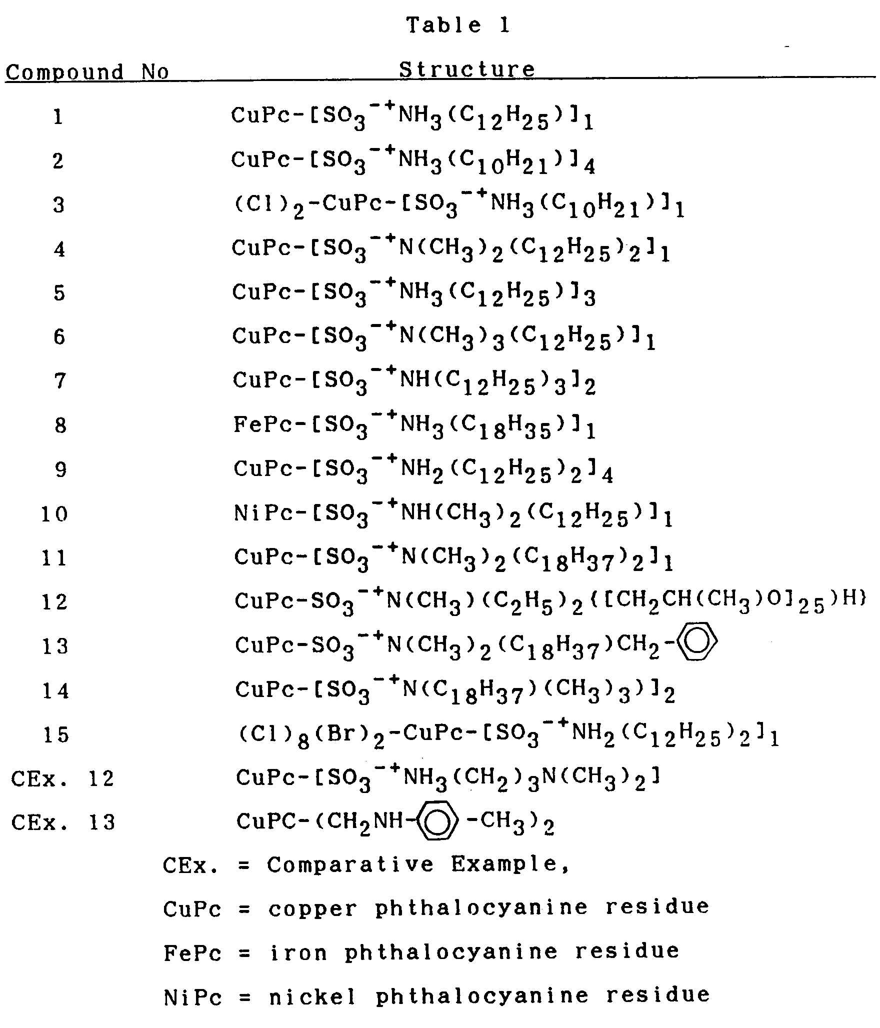

### Example 1

100 Parts of a crude halogen-free copper phthalocyanine produced by a conventional method, 400 parts of milled sodium chloride, 80 parts of diethylene glycol and Compounds No. 1 in Table 1 (in an amount shown in Table 2) were charged into a double-armed kneader having a volume of 1,000 parts, and kneaded at 100 to 110°C for 4 hours while maintaining the mixture in the form of a dense mass (dough). Thereafter, the kneaded mixture was added to 1,300 parts of a 1 % sulfuric acid aqueous solution having a temperature of 70°C, and the mixture was stirred under heat at 70°C for 1 hour, filtered, washed with water and dried to give a copper phthalocyanine pigment.

### Examples 2 - 5

Copper phthalocyanine pigments were obtained in the same manner as in Example 1 except that Compound No. 1 was replaced with Compounds Nos. 2 to 5 in Table 1 (in amounts shown in Table 2).

### Comparative Example 1

A copper phthalocyanine pigment was prepared in the same manner as in Example 1 except that Compound No. 1 was not added.

### Comparative Examples 2 - 6

Copper phthalocyanine pigments were prepared in the same manner as in Examples 1 to 5 except that Compounds Nos. 1 to 5 were added when kneaded mixtures were purified with an acid (1 % sulfuric acid aqueous solution).

### Examples 6 and 7

100 Parts of a crude, semi-chlorinated copper phthalocyanine prepared by a conventional method, 510 parts of milled sodium chloride, 95 parts of diethylene glycol and one of Compounds Nos. 6 and 7 (for Examples 6 and 7) in Table 1 (in amounts shown in Table 3) were charged into a double-armed kneader having a volume of 1,000 parts, and kneaded at 110 to 120°C for 9 hours while maintaining the mixture in the form of a dense mass (dough). Thereafter, the kneaded mixture was added to 1,500 parts of a 1 % sulfuric acid aqueous solution having a temperature of 70°C, and the mixture was stirred under heat at 70°C for 1.5 hours, filtered, washed with water and dried to give a copper phthalocyanine pigment.

### Comparative Example 7

A copper phthalocyanine pigment was prepared in the same manner as in Example 6 except that Compound No. 6 was not added.

### Examples 8 - 10

100 Parts of a crude, mono-chlorinated copper phthalocyanine prepared by a conventional method, 550 parts of milled sodium chloride, 80 parts of diethylene glycol and one of Compounds Nos. 8 to 10 (for Examples 8 to 10) in Table 1 (amounts shown in Table 3) were charged into a double-armed kneader having a volume of 1,000 parts, and kneaded at room temperature for 10 hours while maintaining the mixture in the form of a dense mass (dough). Thereafter, the kneaded mixture was added to 1,500 parts of a 1 % sulfuric acid aqueous solution having a temperature of 70°C, and the mixture was stirred under heat at 70°C for 1.5 hours, filtered, washed with water and dried to give a copper phthalocyanine pigment.

### Comparative Example 8

A copper phthalocyanine pigment was prepared in the same manner as in Example 8 except that Compound No. 8 was not added.

### Examples 11 - 15

100 Parts of a crude, halogen-free copper phthalocyanine prepared by a conventional method, 400 parts of milled sodium chloride, 80 parts of diethylene glycol and one of Compounds Nos. 11 to 15 (for Examples 11 to 15) in Table 1 (amounts shown in Table 4) were charged into a double-armed kneader having a volume of 1,000 parts, and kneaded at 110 to 110°C for 4 hours while maintaining the mixture in the form of a dense mass (dough). Thereafter, the kneaded mixture was added to 1,300 parts of a 1 % sulfuric acid aqueous solution having a temperature of 70°C, and the mixture was stirred under heat at 70°C for 1 hour, filtered, washed with water and dried to give a copper phthalocyanine pigment.

### Comparative Example 9

A copper phthalocyanine pigment was prepared in the same manner as in Example 11 except that Compound No. 11 was not added.

### Example 16

100 Parts of a crude, halogen-free copper phthalocyanine prepared by a conventional method, 450 parts of milled sodium chloride, 90 parts of diethylene glycol, 4 parts of Compound No. 1 and 3 parts of Compound No. 9 were charged into a double-armed kneader having a volume of 1,000 parts, and kneaded at 110 to 110°C for 5 hours while maintaining the mixture in the form of a dense mass (dough). Thereafter, the kneaded mixture was added to 1,300 parts of a 1 % sulfuric acid aqueous solution having a temperature of 70°C, and the mixture was stirred under heat at 70°C for 1 hour, filtered, washed with water and dried to give a copper phthalocyanine pigment.

### Example 17

A copper phthalocyanine pigment was prepared in the same manner as in Example 6 except that the crude, semi-chlorinated copper phthalocyanine was replaced with a crude, halogen-free copper phthalocyanine.

### Comparative Example 10

A copper phthalocyanine pigment was prepared in the same manner as in Example 17 except that Compound No. 6 used in Example 17 was not added.

### Example 18

A copper phthalocyanine pigment was prepared in the same manner as in Example 8 except that the crude, mono-chlorinated copper phthalocyanine was replaced with a crude, halogen-free copper phthalocyanine.

### Comparative Example 11

A copper phthalocyanine pigment was prepared in the same manner as in Example 18 except that Compound No. 8 used in Example 18 was not added.

### Example 19

A copper phthalocyanine pigment was prepared in the same manner as in Example 6 except that the crude, semi-chlorinated copper phthalocyanine was replaced with a crude, halogen-free copper phthalocyanine.

### Example 20

A copper phthalocyanine pigment was prepared in the same manner as in Example 8 except that the crude, mono-chlorinated copper phthalocyanine was replaced with a crude, halogen-free copper phthalocyanine.

### Examples 21 - 25

A copper phthalocyanine pigment was prepared in the same manner as in Examples 1 to 5 except that half of the entire amount of one of Compounds Nos. 1 to 5 was added during the kneading (milling) and that the remaining half was added when the kneaded mixture was purified with an acid (1 % sulfuric acid aqueous solution) after the kneading.

### Comparative Example 12

A copper phthalocyanine pigment was prepared in the same manner as in Example 1 except that Compound No. 1 was replaced with Compound No. CEx. 12 shown in Table 1 (described in Example 2 of JP-A-60-133065).

### Comparative Example 13

A copper phthalocyanine pigment was prepared in the same manner as in Example 1 except that Compound No. 1 was replaced with Compound No. CEx. 13 shown in Table 1 (described in Example 8 of JP-A-60-188470).

The pigments obtained in Examples 1 to 5, 17, 18 and 21 to 25 and Comparative Examples 1 to 6 and 10 to 13 were evaluated as follows.

20 Parts of one of the above pigments, 80 parts of a gravure ink vehicle composed of components listed below and 300 parts of steal balls were mixed, and the mixture was dispersed with a paint conditioner for 90 minutes to obtain a gravure ink composition. The so-obtained gravure ink composition was measured with a BM viscometer for a fluidity immediately after its preparation and a fluidity (stability with time) after it was allowed to stand at 40°C for 24 hours. Further, the gravure ink composition was color-developed developed (coated) on a color-developing film and the coating was measured for a gloss with a glossmeter.

| (Components for vehicle for gravure ink) | |
|---|---|
| Nitrocellulose (RS-1/4) | 5.5 parts |
| Ethyl acetate | 4.0 parts |
| Isopropyl alcohol | 2.0 parts |
| Ethyl alcohol | 20.0 parts |
| Plasticizer | 1.0 part |

Table 2 shows the results.

**Table 2**

| | Pigment composition | | | Fluidity (cps) BM viscometer Value at 6 rpm | | Gloss |
|---|---|---|---|---|---|---|
| | Pigment | Compound | | A1* | A2* | |
| | | No. | Amount | | | |
| Ex.1 | C.I. Pigment Blue 15:3 | 1 | 8 % | 3,700 | 12,400 | 78 % |
| Ex.21 | ditto | 1 | 8 % | 2,400 | 9,000 | 81 % |
| CEx.1 | ditto | - | - | 5,600 | 30,100 | 60 % |
| CEx.2 | ditto | 1 | 8 % | 4,800 | 18,600 | 68 % |
| CEx.12 | ditto | CEx.12 | 8 % | 5,400 | 29,600 | 62 % |
| CEx.13 | ditto | CEx.13 | 8 % | 4,700 | 34,300 | 70 % |
| Ex.2 | ditto | 2 | 10 % | 3,200 | 10,800 | 81 % |
| Ex.22 | ditto | 2 | 10 % | 2,050 | 8,400 | 84 % |
| CEx.3 | ditto | 2 | 10 % | 4,200 | 16,400 | 74 % |
| Ex.3 | ditto | 3 | 6 % | 3,800 | 11,800 | 78 % |
| Ex.23 | ditto | 3 | 6 % | 3,000 | 10,000 | 80 % |
| CEx.4 | ditto | 3 | 6 % | 4,400 | 14,400 | 69 % |
| Ex.4 | ditto | 4 | 10 % | 3,000 | 9,400 | 80 % |
| Ex.24 | ditto | 4 | 10 % | 1,950 | 7,200 | 85 % |
| CEx.5 | ditto | 4 | 10 % | 4,200 | 12,400 | 75 % |
| Ex.5 | ditto | 5 | 18 % | 2,500 | 7,800 | 81 % |
| Ex.25 | ditto | 5 | 18 % | 1,430 | 4,380 | 84 % |
| CEx.6 | ditto | 5 | 18 % | 4,800 | 10,200 | 76 % |
| Ex.17 | C.I. Pigment Blue 15:1 | 2 | 10 % | 3,400 | 11,500 | 79 % |
| CEx.10 | ditto | - | - | 6,700 | 29,600 | 64 % |
| Ex.18 | ditto | 3 | 6 % | 4,200 | 12,800 | 78 % |
| CEx.11 | ditto | - | - | 6,300 | 32,000 | 60 % |
| Ex. = Example, CEx. = Comparative Example | | | | | | |

| | | | | | | |
|---|---|---|---|---|---|---|
| A1: = Fluidity immediately after preparation (dispersion) | | | | | | |
| A2: = Fluidity after composition was allowed to stand at 40°C for 24 hours. | | | | | | |

The pigments obtained in Examples 6 to 10 and Comparative Examples 7 and 8 were evaluated as follows.

20 Parts of one of the above pigments, 60 parts of a coating composition vehicle composed of components listed below and 300 parts of steal balls were mixed, and the mixture was dispersed with a paint conditioner for 90 minutes. Then, 33.8 parts of an alkyd resin varnish and 14.5 parts of a melamine resin varnish were added to the dispersion to obtain a coating composition. The coating composition was measured for a fluidity with a BM viscometer immediately after its preparation. The coating composition was color-developed (coated) and the coating was measured for a gloss with a glossmeter.

| (Components for vehicle for coating composition) | |
|---|---|
| Alkyd resin varnish (nonvolatile content 60 %) | 26.4 parts |
| Melamine resin varnish (nonvolatile content 50 %) | |
| Suwazole (solvent, supplied by Nihon Sekiyu Co.) | 20.0 parts |

Table 3 shows the results.

**Table 3**

| | Pigment composition | | | Fluidity (cps) BM viscometer Value at 6 rpm | | Gloss |
|---|---|---|---|---|---|---|
| | Pigment | Compound | | A1* | A2* | |
| | | No. | Amount | | | |
| Ex.6 | C.I. Pigment Blue 15:1 | 6 | 7 % | 6,400 | 10,020 | 88 % |
| Ex.7 | ditto | 7 | 7 % | 7,700 | 11,500 | 84 % |
| CEx.7 | ditto | - | - | 8,700 | 12,600 | 73 % |
| Ex.8 | ditto | 8 | 7 % | 7,300 | 11,300 | 83 % |
| Ex.9 | ditto | 9 | 4 % | 6,800 | 9,800 | 88 % |
| Ex.10 | ditto | 10 | 4 % | 7,400 | 11,000 | 86 % |
| CEx.8 | ditto | - | - % | 8,800 | 13,400 | 75 % |
| Ex.19 | C.I. Pigment Blue 15:3 | 6 | 7 % | 4,800 | 6,600 | 92 % |
| Ex.20 | ditto | 8 | 7 % | 5,300 | 7,400 | 90 % |
| Ex. = Example, CEx. = Comparative Example | | | | | | |

| | | | | | | |
|---|---|---|---|---|---|---|
| A1: = Fluidity immediately after preparation (dispersion) | | | | | | |
| A2: = Fluidity after composition was allowed to stand at 40°C for 24 hours. | | | | | | |

The pigments obtained in Examples 11 to 16 and Comparative Example 9 were evaluated as follows.

17 Parts of one of the above pigments and 76 parts of a rosin-modified phenolic resin varnish (nonvolatile content 70 %) were mixed, and the mixture was kneaded with a three-roll mill. Then, the kneaded mixture was adjusted to a tack of 9.0 to 9.5 by adding a petroleum solvent to give an offset ink composition. The so-obtained composition was measured for a fluidity immediately with a spreadometer after it was prepared. Further, the composition was color-developed and measured for a gloss with a glossmeter and for a tinting strength with a densitometer.

Table 4 shows the results.

**Table 4**

| | Pigment composition | | | Fluidity | | Density of proof printing 0.2 cc | Gloss (%) |
|---|---|---|---|---|---|---|---|
| | Pigment | Compound | | SR | Slope | | |
| | | No. | Amount | | | | |
| Ex.11 | C.I. Pigment Blue 15:3 | 11 | 8 % | 18.4 | 4.7 | 2.02 | 67 |
| Ex.12 | ditto | 12 | 8 % | 18.2 | 4.4 | 2.03 | 68 |
| Ex.13 | ditto | 13 | 5 % | 17.9 | 4.4 | 1.98 | 62 |
| Ex.14 | ditto | 14 | 5 % | 18.0 | 4.2 | 1.99 | 65 |
| Ex.15 | ditto | 15 | 5 % | 17.9 | 4.0 | 2.10 | 66 |
| Ex.16 | ditto | 1 | 4 % | 18.2 | 4.0 | 2.02 | 66 |
| | | 9 | 4 % | | | | |
| CEx.9 | ditto | - | - | 17.4 | 3.9 | 1.82 | 61 |

The above results show the following. The printing ink and the coating composition containing the pigment produced by the process of the present invention shows excellent fluidity and gives a printed product or coating having excellent gloss as compared with the printing ink and the coating composition obtained from a phthalocyanine pigment alone or by dry-blending a phthalocyanine pigment and a phthalocyanine derivative.

When the pigment produced by the process of the present invention is dispersed in a vehicle for a printing ink or a coating composition, the resultant dispersion remarkably shows excellent fluidity over a conventional composition containing pigment alone or a dry blend of a pigment and a phthalocyanine derivative. Further, a color-developed product or a coating obtained from a printing ink or a coating composition containing the pigment produced by the process of the present invention shows improved gloss. Further, when the pigment produced by the process of the present invention is used for coloring plastics, the pigment shows excellent fluidity and gives a colored product having high tinting strength.

In formula (1), when R₁, R₂, R₃ and R₄ is a polyoxy lower alkylene group, the alkylene group preferably comprises from 1 to 4 carbon atoms. Preferred examples of suitable polyoxy lower alkylene groups include polyoxyethylene and polyoxypropylene.

The inorganic salt used in the process of the invention is any inorganic salt conventionally used as a milling aid. The salt is preferably water-soluble. Suitable salts include salts of sodium, calcium and magnesium. The salts may be chlorides, bromides or sulphates. Preferred examples of suitable salts are sodium chloride, sodium sulphate and calcium chloride.

The organic liquid used in the process of the invention is selected from alcohols and polyols. The liquid is preferably soluble in water at least to some extent. Suitable alcohols are C₁₋₆ alcohols, preferably C₁₋₄ alcohols. Examples include n-propyl alcohol, n-butyl alcohol, isopropyl alcohol and isobutyl alcohol. Suitable polyols include polyols, ethers of polyols, esters of polyols, and chlorinated derivatives thereof. Preferred are polyols having 2 to 15 carbon atoms, preferably 2 to 12 carbon atoms. Suitable examples include ethylene glycol, diethylene glycol, triethylene glycol, tetraethylene glycol, propylene glycol, dipropylene glycol, tripropylene glycol and tetrapropylene glycol.

## Claims

1. A process for the production of a copper phthalocyanine pigment, which comprises wet-milling at least one crude copper phthalocyanine selected from halogen-free copper phthalocyanine, monohalogenated copper phthalocyanine and semi-halogenated copper phthalocyanine in the presence of an inorganic salt as a milling aid and an organic liquid selected from an alcohol and a polyol, and then removing the inorganic salt and the organic liquid,
wherein 0.1 to 20% by weight, based on the crude copper phthalocyanine, of a compound of the following formula (I) is added before or during the wet-milling,
MePc- (SO₃ ⁻⁺ NR₁R₂R₃R₄)ₙ (1)
wherein Me represents two hydrogen atoms or at least one metal selected from Al, Fe, Co, Ni, Cu and Zn, Pc is a phthalocyanine residue, each of R_{1,} R_{2,} R₃ and R₄ is independently a polyoxy lower alkylene group, a hydrogen atom or an alkyl group having 1 to 30 carbon atoms which is optionally substituted with at least one of phenyl, halogen, hydroxyl, carbonyl, carboxyl, ether, ester and acyl, and n is an integer of 1 to 8, provided that at least one of R_{1,} R_{2,} R₃ and R₄ is an alkyl group having at least 10 carbon atoms or a polyoxy lower alkylene group.

2. A process according to claim 1, wherein a compound obtained by sulfonating a phthalocyanine and reacting the sulfonated phthalocyanine with an amine is used as the compound of the formula (1).

3. A process according to claim 2, wherein the amine is at least one selected from primary, secondary and tertiary amines and quaternary ammonium.

4. A process according to any preceding claim, wherein the polyoxy lower alkylene group has a polymerization degree of 2 to 30.

5. A process according to any preceding claim, wherein the milling aid is a water-soluble inorganic salt.

6. A process according to any preceding claim, wherein the organic liquid is water-soluble.

7. A process for producing a printing ink composition which process comprises;
preparing a copper phthalocyanine pigment by a process according to any one of claims 1 to 6; and
dispersing the thus obtained pigment with a vehicle.

8. A process for producing a coating composition which process comprises;
preparing a copper phthalocyanine pigment by a process according to any one of claims 1 to 6; and
dispersing the thus obtained pigment with a vehicle.

9. Use of a compound of formula (I), as defined in any one of claims 1 to 4, as an agent for preventing crystal growth and re-aggregation in the wet milling of a crude copper phthalocyanine pigment.

## Patentansprüche

1. Verfahren zur Herstellung eines Kupferphthalocyaninpigments, welches das Naßmahlen mindestens eines rohen Kupferphthalocyanins, gewählt aus halogenfreiem Kupferphthalocyanin, monohalogeniertem Kupferphthalocyanin und halbhalogeniertem Kupferphthalocyanin, in Gegenwart eines anorganischen Salzes als Mahlhilfe und einer organischen Flüssigkeit, ausgewählt aus einem Alkohol und einem Polyol, und das anschließende Entfernen des anorganischen Salzes und der organischen Flüssigkeit umfaßt,
wobei 0,1 bis 20 Gew.-%, bezogen auf das rohe Kupferphthalocyanin, einer Verbindung der folgenden Formel (I) vor oder während dem Naßmahlen zugegeben werden,
MePc- (SO₃ ⁻⁺ NR₁R₂R₃R₄)ₙ (1)
worin Me für zwei Wasserstoffatome oder mindestens ein Metall, gewählt aus Al, Fe, Co, Ni, Cu und Zn steht, Pc ein Phtalocyaninrest ist, jedes von R₁, R₂, R₃ und R₄ unabhängig voneinander eine Polyoxyniederalkylengruppe, ein Wasserstoffatom oder eine Alkylgruppe mit 1 bis 30 Kohlenstoffatomen, die optional durch mindestens eines von Phenyl, Halogen, Hydroxyl, Carbonyl, Carboxyl, Ether, Ester und Acyl substituiert ist, ist und n eine ganze Zahl von 1 bis 8 ist, unter der Maßgabe, daß mindestens eines von R₁, R₂, R₃ und R₄ eine Alkylgruppe mit mindestens 10 Kohlenstoffatomen oder eine Polyoxyniederalkylengruppe ist.

2. Verfahren gemäß Anspruch 1, wobei eine durch Sulfonieren eines Phthalocyanins und Umsetzen des sulfonierten Phthalocyanins mit einem Amin erhaltene Verbindung als Verbindung der Formel (1) verwendet wird.

3. Verfahren gemäß Anspruch 2, wobei das Amin mindestens eines, gewählt aus primären, sekundären und tertiären Aminen und quaternärem Ammonium, ist.

4. Verfahren gemäß mindestens einem der vorhergehenden Ansprüche, wobei die Niederpolyoxyalkylengruppe einen Polymerisationsgrad von 2 bis 30 aufweist.

5. Verfahren gemäß mindestens einem der vorhergehenden Ansprüche, wobei die Mahlhilfe ein wasserlösliches anorganisches Salz ist.

6. Verfahren gemäß mindestens einem der vorhergehenden Ansprüche, wobei die organische Flüssigkeit wasserlöslich ist.

7. Verfahren zur Herstellung einer Druckfarbenzusammensetzung, wobei das Verfahren das Folgende umfaßt:
Herstellen eines Kupferphthalocyaninpigments durch ein Verfahren gemäß mindestens einem der Ansprüche 1 bis 6; und
Dispergieren des so erhaltenen Pigments mit einem Vehikel.

8. Verfahren zur Herstellung einer Beschichtungszusammensetzung, wobei das Verfahren das Folgende umfaßt:
Herstellen eines Kupferphthalocyaninpigments durch ein Verfahren gemäß mindestens einem der Ansprüche 1 bis 6; und
Dispergieren des so erhaltenen Pigments mit einem Vehikel.

9. Verwendung einer Verbindung der Formel (I), wie in mindestens einem der Ansprüche 1 bis 4 definiert, als ein Mittel zur Verhinderung von Kristallwachstum und Reaggregation bzw. Wiederanhäufung beim Naßmahlen eines rohen Kupferphthalocyaninpigments.

## Revendications

1. Procédé pour la production d'un pigment de phtalocyanine de cuivre, le procédé comprenant les étapes suivantes : broyage humide d'au moins une phtalocyanine de cuivre brute choisie parmi les suivantes : phtalocyanine de cuivre dépourvue d'halogène, phtalocyanine de cuivre mono halogénée et phtalocyanine de cuivre semi halogénée, en la présence d'un sel inorganique comme adjuvant de broyage et d'un liquide organique choisi parmi un alcool et un polyol, et enlèvement du sel inorganique et du liquide organique,
dans lequel 0,1 à 20 % en poids, sur la base de la phtalocyanine de cuivre brute, d'un composé de la formule (1) suivante est ajouté avant ou pendant le broyage humide,
MePc- (SO₃ ⁻⁻ NR₁R₂R₃R₄)ₙ (1)
dans laquelle Me représente deux atomes d'hydrogène ou au moins un métal choisi parmi Al, Fe, Co, Ni, Cu et Zn, Pc est un résidu de phtalocyanine, chacun de R₁, R₂, R₃ et R₄ est, indépendamment l'un de l'autre, un groupe polyoxyacoylène inférieur, un atome d'hydrogène ou un groupe alcoyle ayant 1 à 30 atomes de carbone, qui est facultativement substitué avec au moins l'un d'un phényle, d'un halogène, d'un hydroxyle, d'un carbonyle, d'un carboxyle, d'un éther, d'un ester et d'un acide, et n est un entier de 1 à 8, pourvu qu'au moins l'un de R₁, R₂, R₃ et R₄ soit un groupe alcoyle ayant au moins 10 atomes de carbone ou un groupe polyoxyalcoylène inférieur.

2. Procédé selon la revendication 1, dans lequel un composé obtenu en sulfonant une phtalocyanine et en faisant réagir la phtalocyanine sulfonée avec une amine est utilisé comme composé de la formule (1).

3. Procédé selon la revendication 2, dans lequel l'amine est au moins une amine choisie parmi des amines primaires, secondaires et tertiaires, et l'ammonium quaternaire.

4. Procédé selon l'une des revendications précédentes, dans lequel le groupe polyoxyalcoylène inférieur a un degré de polymérisation de 2 à 30.

5. Procédé selon l'une des revendications précédentes, dans lequel l'adjuvant de broyage est un sel inorganique soluble dans l'eau.

6. Procédé selon l'une des revendications précédentes, dans lequel le liquide organique est soluble dans l'eau.

7. Procédé pour produire une composition d'encre d'imprimerie, lequel procédé comprend les étapes suivantes :
- préparer un pigment de phtalocyanine de cuivre par un procédé selon l'une des revendications 1 à 6 ; et
- disperser le pigment ainsi obtenu avec un véhicule.

8. Procédé pour produire une composition de revêtement, lequel procédé comprend les étapes suivantes :
- préparer un pigment de phtalocyanine de cuivre par un procédé selon l'une des revendications 1 à 6 ; et
- disperser le pigment ainsi obtenu avec un véhicule.

9. Utilisation d'un composé de la formule (1), tel que défini dans l'une des revendications 1 à 4, comme agent pour empêcher la croissance des cristaux et une ré-agrégation dans le broyage humide d'un pigment de phtalocyanine de cuivre brute.
